# EUROPÄISCHE PATENTSCHRIFT

(11) **EP 1 584 206 B1**
(45) Veröffentlichungstag und Bekanntmachung des Hinweises auf die Patenterteilung: **21.06.2006**
(21) Anmeldenummer: 03815064.5
(22) Anmeldetag: 19.12.2003
(51) Int. Cl.: H04Q 7/22, H04Q 7/38

(54) **STEUERUNG DES KONFIGURATIONSZUSTANDS EINES MOBILFUNKGERÄTES FÜR EINEN MULTICAST SERVICE**
CONTROL OF THE CONFIGURATION STATUS OF A MOBILE RADIO DEVICE FOR A MULTICAST SERVICE
COMMANDE DE L'ETAT DE CONFIGURATION D'UN APPAREIL RADIOTELEPHONIQUE MOBILE POUR UN SERVICE DE MULTIDIFFUSION

(30) Priorität: 13.01.2003 EP 03000749
(43) Veröffentlichungstag der Anmeldung: 12.10.2005
(73) Patentinhaber: SIEMENS AKTIENGESELLSCHAFT, 80333 München (DE)
(72) Erfinder: KROTH, Norbert, 14471 Potsdam (DE); SCHNIEDENHARN, Jörg, 53225 Bonn (DE); VESELY, Alexander, A-1170 Wien (AT)
(86) Internationale Anmeldenummer: PCT/EP2003/014638
(87) Internationale Veröffentlichungsnummer: WO 2004/064421

(56) Entgegenhaltungen:
- EP-A- 1 006 740
- WO-A-02/47417
- "3GPP TR 23.875 V5.1.0 (2002-03); Technical Specification Group Services and System Aspects; Support of Push service (Release 5); pages 1,2,61-68" 3GPP, 3RD GENERATION PARTNERSHIP PROJECT, März 2002 (2002-03), XP002243894
- KPN: "Assessment of push bearers" 3GPP_TSG_SA1&SA2&T2 AD HOC MEETING, [Online] 5. Juli 2001 (2001-07-05), Seiten 1-3, XP002243895 London Gefunden im Internet: <URL:http://www.3gpp.org/ftp/tsg_sa/WG1_Se rv/Sub_WG_Adhocs/Push/Push-01/PU-010009.do chttp://www.3gpp.org/ftp/tsg_sa/WG1_Serv/S ub_WG_Adhocs/Push/Push-01/PU-010009.doc> [gefunden am 2003-06-11]

## Beschreibung

Die Erfindung betrifft ein Verfahren zum Betreiben eines Funkkommunikationssystems nach dem Oberbegriff des Anspruchs 1.

Die Erfindung betrifft ferner eine Einrichtung zur Funkzugangskontrolle zwischen mindestens einer Basisstation und Teilnehmerstationen über eine Luftschnittstelle in einem Funkkommunikationssystem nach dem Oberbegriff des Anspruchs 7.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Luftschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen (SMS), sowie digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem einer flexiblen Verwaltung der Kapazität der Luftschnittstelle, die bei Funkkommunikationssystemen die Schnittstelle mit den geringsten Ressourcen ist. Bei diesen Funkkommunikationssystemen soll es vor allem durch die flexible Verwaltung der Luftschnittstelle möglich sein, dass eine Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funkkommunikationssystemen durch Vielfachzugriffsverfahren (Multiple Access, MA) geregelt.

Die Verbindung zwischen einer Basisstation und einer Teilnehmerstation erfolgt über eine Luftschnittstelle. Die Basisstation kann dabei mehrere Funkzellen bedienen.

Üblicherweise sind mindestens eine Basisstation und eine Einrichtung zur Funkzugangskontrolle (RNC, Radio Network Controler) Bestandteile eines Basisstationssubsystems (RNS, Radio Network Subsystem). Ein Funkkommunikationssystem umfasst in der Regel mehrere Basisstationssubsysteme, die an ein Kernnetz (CN, Core Network) angeschlossen sind. Dabei ist die Einrichtung zur Funkzugangskontrolle des Basisstationssubsystems mit einer Zugangseinrichtung des Kernnetzes verbunden.

Für die Adressierung von Teilnehmerstationen in Funkkommunikationssystemen sind verschiedene Verfahren bekannt. Neben dem Einzelsenderuf (Unicast), bei dem genau eine Teilnehmerstation adressiert wird, ist der Rundsenderuf (Broadcast), bei dem alle Teilnehmerstationen in Funkreichweite der sendenden Basisstation adressiert werden, am häufigsten vertreten. Weiterhin existiert der Gruppensenderuf (Multicast), bei dem die Teilnehmerstationen einer Multicast-Gruppe gleichzeitig mit dem Aussenden einer Multicast-Information adressiert werden. Ein Multicast, bei dem alle Funkstationen in der Reichweite einer Basisstation adressiert werden, entspricht einem Broadcast.

Neben individuellen Nutzinformationen werden in Funkkommunikationssystemen somit Daten übertragen, die mehreren Benutzern zur Verfügung gestellt werden. Beispielsweise umfassen solche Nutzinformationen Video streams oder andere Broadcast- und/oder Multicast-Informationen. Die Dienste zur Übertragung von Nutzinformationen, welche nicht nur individuell für einen einzigen Teilnehmer vorgesehen sind, sondern mehreren Teilnehmern zur Verfügung gestellt werden, werden unter dem Begriff MBMS (Multimedia. Broadcast/Multicast Service) zusammengefasst. Unterschiedliche MBMS-Dienste (Multimedia Broadcast/Multicast Service) werden vom Kernnetz in der Regel als separate Datenströme bereitgestellt.

Für die Teilnehmerstationen innerhalb der Funkkommunikationssysteme sind in der Regel mehrere Konfigurationszustände zugänglich. Im UMTS handelt es sich hierbei z.B. um einen Leerlaufmodus (Idle Mode), sowie um einen Verbindungsmodus, welcher sich aufteilt in die Zustände CELL_DCH, CELL_FACH, CELL_PCH und URA_PCH.

Das Dokument WO 02/47417 A1 beschreibt ein Funkkommunikationssystem, in welchem Teilnehmerstationen ein PTM-M (Point-To-Multipoint-Multicast) zur Verfügung gestellt wird. Die Teilnehmerstationen können sich im "idle mode" oder im "sleep mode" befinden. Nachdem eine Teilnehmerstätion eine PTM-M Nachricht empfangen hat, nimmt sie den "sleep mode" an.

Das Dokument 3GPP TR 23.875 V5.1.0, XP-002243894, 3^{rd} Generation Partnership Project; Technical Specification Group Services and System Aspects; Support of Push Service (Release 5) beschreibt im Anhang B ein Verfahren zum Zustellen einer Push-Nachricht an eine Teilnehmerstation, bei welchem die Teilnehmerstation bei Vorhandensein einer Push-Nachricht gepaget wird, woraufhin der PDP-Kontext aktiviert wird. Erst nach Aktivierung des PDP-Kontextes kann die Teilnehmerstation die Push-Nachricht empfangen. Nach dem Empfang der Push-Nachricht wird der PDP-Kontext wieder deaktiviert.

Der Erfindung liegt die Aufgabe zugrunde, ein Verfahren und eine Einrichtung zur Funkzugangskontrolle der eingangs genannten Art aufzuzeigen, welche zur effizienten Organisation der Luftschnittstelle in einem Funkkommunikationssystem mit gruppenspezifischen Diensten beiträgt.

Diese Aufgabe wird durch ein Verfahren mit den Merkmalen des Anspruchs 1 und durch eine Einrichtung mit den Merkmale des Anspruchs 7 gelöst.

Vorteilhafte Ausgestaltungen und Weiterbildungen sind Gegenstand der abhängigen Ansprüche.

In dem Funkkommunikationssystem werden Nutzinformationen als Dienst einer Gruppe von Teilnehmerstationen über Funk zur Verfügung gestellt. Für mindestens eine Teilnehmerstation der Gruppe sind mindestens zwei verschiedene Konfigurationszustände zugänglich. Erfindungsgemäß entscheidet die Einrichtung zur Funkzugangskontrolle aufgrund von einem oder mehreren Parametern über die Art des nach dem Empfang der Nutzinformationen von der mindestens einen Teilnehmerstation einzunehmenden Konfigurationszustandes.

Eine Gruppe besteht hierbei aus mindestens einer Teilnehmerstation, in der Regel jedoch aus einer Viel- bzw. Mehrzahl von Teilnehmerstationen. Die maximale Anzahl an Teilnehmerstationen innerhalb der Gruppe entspricht der Anzahl der Teilnehmerstationen des Funkkommunikationssystems. Das Funkkommunikationssystem kann also Teilnehmerstationen der Gruppe und weitere Teilnehmerstationen, welche z.B. anderen Gruppen angehören können, umfassen, oder auch ausschließlich solche Teilnehmerstationen, welche der Gruppe angehören. Die Erfindung ist somit auf Broadcast- und auf Multicast-Dienste anwendbar.

Die Entscheidung über die Art des einzunehmenden Konfigurationszustandes betrifft mindestens eine Teilnehmerstation der Gruppe. Sie kann jede Anzahl von Gruppenmitgliedern bis hin zur Gesamtzahl der Teilnehmerstationen der Gruppe betreffen. Für verschiedene Gruppenmitglieder können hierbei auch Entscheidungen mit verschiedenen Ergebnissen getroffen werden. Es ist möglich, dass die Teilnehmerstationen, welche einer solchen Entscheidung unterliegen, durch eine Bedingung oder einen gemeinsamen Parameter, wie z.B. eine regionale Beschränkung oder einen Vertrag mit dem Betreiber des Funkkommunikationssystems, bestimmt sind.

Bei den zugänglichen Konfigurationszuständen kann es sich z.B. um zu beobachtende physikalische Kanäle oder auch Betriebszustände einer Teilnehmerstation handeln.

In einer Ausgestaltung der Erfindung handelt es bei dem einen Parameter oder bei mindestens einem der Parameter um einen Parameter des Dienstes. Es kann also einzig aufgrund eines oder mehrerer Parameter eines Broadcast- oder Multicast-Dienstes entschieden werden, oder auch aufgrund einer Kombination von einem oder mehrerer Parameter des betreffenden Dienstes mit anderen Parametern wie z.B. der Verkehrsauslastung.

Vorzugsweise handelt es sich bei dem einen Parameter oder bei dem mindestens einen der Parameter des Dienstes um eine Dienstpriorität oder um eine Wiederholfrequenz zur Aussendung des Dienstes, wie z.B. eine Aussendung von Nutzinformation in Zeitabständen von 5 Minuten oder eine Häufigkeit der Übertragung des Dienstes, oder um eine Länge von Nutzinformationen des Dienstes, wie z.B. eine durchschnittliche Länge der Übertragung des Dienstes, oder um eine Anzahl von Nutzinformationen, wie z.B. eine Anzahl von Datenpaketen, welche im Rahmen des Dienstes verschickt werden, oder um Informationen über die Behandlung des Dienstes durch andere Einrichtungen zur Funkzugangskontrolle, wie z.B. ob ein anderes Funkkommunikationssystem mit lokaler Überschneidung den betreffenden Dienst aktuell auch anbietet, oder um Kosteninformation. Bezüglich der Kosteninformation könnte z.B. von der Einrichtung zur Funkzugangskontrolle entschieden werden, dass für teure Dienste die für diesen Dienst subskribierten Teilnehmerstationen in einem für das Funkkommunikationssystem relativ aufwendigen Konfigurationszustand gehalten werden. Entsprechendes gilt auch für einen Dienst mit einer hohen Dienstpriorität. Der Einrichtung zur Funkzugangskontrolle kann somit eine Liste von Parametern des Dienstes, wie z.B. ein Verkehrsprofil eines Multicast- oder eines Broadcast-Dienstes zur Verfügung stehen. Die Listeneinträge sind dann jeweils für sich genommen oder in Kombination miteinander oder mit anderen Parametern Grundlage für die Entscheidung über den Konfigurationszustand einer oder mehrerer Teilnehmerstationen.

Gemäß einer Ausgestaltung der Erfindung handelt es sich bei mindestens einem der Parameter um eine Eigenschaft der mindestens einen Teilnehmerstation. Dies könnte z.B. eine Priorisierung der Teilnehmerstation innerhalb des Funkkommunikationssystems oder Informationen über den Batterie- bzw. Akkuzustand der Teilnehmerstation sein.

Mit Vorteil kann es sich bei den zugänglichen Konfigurationszuständen um einen Verbindungsmodus und einen Leerlaufmodus handeln. Ein Verbindungsmodus zeichnet sich dadurch aus, dass in diesem Konfigurationszustand eine Signalisierungsverbindung zwischen der Teilnehmerstation und dem Funknetz aufrecht erhalten wird und der Teilnehmerstation eine Funknetzwerkidentifikation zugewiesen wurde. Im Leerlaufmodus hingegen ist die Teilnehmerstation der Einrichtung zur Funkzugangskontrolle nicht bekannt.

In einer Weiterbildung der Erfindung wurde der Einrichtung zur Funkzugangskontrolle mindestens einer der Parameter von einem mit der Einrichtung zur Funkzugangskontrolle verbundenen Kernnetz oder von einer Einrichtung zur Überwachung und Wartung des Funkkommunikationssystems übermittelt.

Erfindungsgemäß weist die Einrichtung zur Funkzugangskontrolle Mittel zur Entscheidung aufgrund von einem oder mehreren Parametern über die Art des nach dem Empfang der Nutzinformationen von der mindestens einen Teilnehmerstation einzunehmenden Konfigurationsszustandes auf. Mittel und Vorrichtungen zur Durchführung des Verfahrens können vorgesehen sein.

Die Erfindung wird im folgenden anhand eines Ausführungsbeispiels erläutert. Dabei zeigen
- Figur 1:: einen Ausschnitt aus einem Funkkommunikationssystem,
- Figur 2:: ein Ablaufdiagramm eines erfindungsgemäßen Verfahrens.

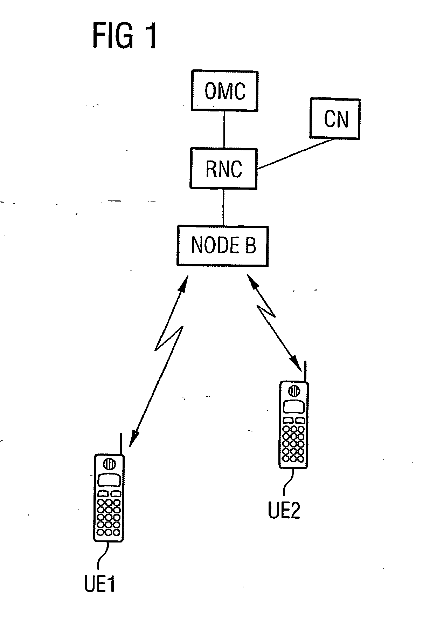

Das Ausführungsbeispiel bezieht sich auf ein Funkkommunikationssystem nach dem UMTS Standard. Figur 1 zeigt einen Ausschnitt aus einem solchen Funkkommunikationssystem der dritten Generation. Dieses umfasst eine Einrichtung RNC zur Funkzugangskontrolle, welche mit einer Basisstation NODE B und einem Kernnetz CN verbunden ist. Die Aufgabe der Einrichtung RNC zur Funkzugangskontrolle besteht in der Steuerung und Überwachung der ihr angeschlossenen Basisstationen mit ihren jeweiligen Funkzellen. Die Basisstation NODE B bedient eine solche Funkzelle, in der sich die Teilnehmerstationen UE1 und UE2 befinden. Weiterhin ist die Einrichtung RNC zur Funkzugangskontrolle mit einer Einrichtung OMC zur Überwachung, Steuerung und Wartung des Funknetzes verbunden.

Die Teilnehmer zu den jeweiligen Teilnehmerstationen UE1 und UE2 wurden für einen Multicast-Dienst subskribiert. Somit bilden die Teilnehmerstationen UE1 und U2 eine Gruppe. Weitere Teilnehmerstationen außerhalb der durch die Subskription der Teilnehmer definierten Gruppe können sich in der Funkzelle der Basisstation aufhalten, welche für die Erläuterung des erfindungsgemäßen Verfahrens jedoch nicht bedeutsam sind.

Es werden von der Basisstation NODE.B Nutzinformationen wie z.B. Börseninformationen oder Videos gesendet, welche die Teilnehmerstationen UE1 und UE2 der Gruppe empfangen und entschlüsseln können. Teilnehmerstationen außer den Teilnehmerstationen UE1 und UE2 der Gruppe können diese Multicast-Informationen nicht entschlüsseln.

Nach dem Einschalten einer Teilnehmerstation in dem Funkkommunikationssystem befindet sich diese in einem Leerlaufmodus (Idle Mode). Dieser Modus zeichnet sich dadurch aus, dass diese Teilnehmerstation zwar in dem Kernnetz CN, nicht aber in dem Funkzugangsnetz (Radio Access Network, RAN) des Funkkommunikationssystems durch eine Identifikationsinformation bekannt ist. Einer Einrichtung RNC zur Funkzugangskontrolle bleibt es somit verborgen, welche Teilnehmerstationen im Leerlaufmodus sich in den Funkzellen der ihr angeschlossenen Basisstationen befinden. Eine Teilnehmerstation im Leerlaufmodus tauscht mit dem Funknetz keine Informationen aus, bis eine Verbindungsanfrage durch die Teilnehmerstation gestellt wird. Nach einer solchen Verbindungsanfrage wechselt die Teilnehmerstation in den Verbindungsmodus. Eine Verbindungsanfrage kann z.B. durch die Nachfrage der Teilnehmerstation nach einem Dienst oder auch durch eine Paging-Anfrage des Funknetzes initiiert werden.

Die Teilnehmerstationen des Funkkommunikationssystems, welche sich in einem Verbindungsmodus befinden, sind der jeweiligen Einrichtung zur Funkzugangskontrolle aufgrund einer Identifikationsinformation bekannt und somit lokalisierbar. Die entsprechende Identifikationsinformation wurde der Einrichtung zur Funkzugangskontrolle von der Teilnehmerstation übermittelt. Auch das Kernnetz kann der Einrichtung zur Funkzugangskontrolle Informationen über die jeweilige Teilnehmerstation übermitteln. Während der Verbindungsmodus aktiv ist, überwachen die jeweiligen Teilnehmerstationen andere Funkkanäle als die Teilnehmerstationen, welche sich aktuell im Leerlaufmodus befinden. Eine Teilnehmerstationen kann sich auch dann in einem Verbindungsmodus befinden, wenn dieser aktuell kein physikalischer Kanal zugewiesen ist.

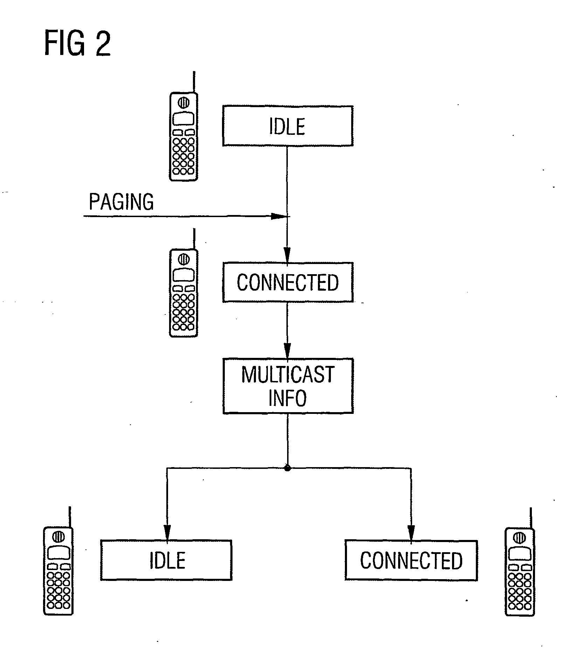

Im Ablaufdiagramm der Figur 2 befindet sich die Teilnehmerstation zu Beginn im Leerlaufmodus IDLE. In diesem Modus kann die Teilnehmerstation keine Nutzinformation des Multicast-Dienstes empfangen. Um diese für den Empfang der Nutzinformation des Multicast-Dienstes konfigurieren zu können, ist es notwendig, sie vor der Übertragung der Nutzinformation zu benachrichtigen. Diese Benachrichtigung erfolgt mittels eines Paging-Kanals, welchen die für den Multicast-Dienst subskribierten Teilnehmerstationen beobachten. Bei dieser Benachrichtigung handelt es sich um gruppenspezifische Informationen, welche ausschließlich an die Teilnehmerstationen UE1 und UE2 der Gruppe adressiert sind. Die Teilnehmerstation der Figur 2 entnimmt dem Signal PAGING die für den Empfang und die Verarbeitung der Nutzinformation des Multicast-Dienstes notwenigen Informationen.

Daraufhin wechselt die Teilnehmerstation durch geeigneten Signalisierungsaustausch mit der Basisstation in den Verbindungsmodus CONNECTED. In diesem Konfigurationszustand empfängt die Teilnehmerstation die Nutzinformation MULTICAST INFO des Multicast-Dienstes.

Nach dem Empfang der Nutzinformation MULTICAST INFO des Multicast-Dienstes kann die Teilnehmerstation entweder in dem Verbindungsmodus CONNECTED verbleiben oder in den Leerlaufmodus IDLE wechseln. In letzterem Fall wird aufgrund der nächsten Paging-Nachricht, welche Nutzinformation des Multicast-Dienstes ankündigt, ein erneuter Wechsel in den Verbindungsmodus CONNECTED initiiert.

Erfindungsgemäß entscheidet die Einrichtung zur Funkzugangskontrolle darüber, ob die Teilnehmerstation nach dem Empfang der Nutzinformation MULTICAST INFO des Multicast-Dienstes in den Leerlaufmodus IDLE wechselt oder im Verbindungsmodus CONNECTED verbleibt. Diese Entscheidung trifft die Einrichtung zur Funkzugangskontrolle unter Zuhilfenahme eines Verkehrsprofils des Multicast-Dienstes, welches der Einrichtung zur Funkzugangskontrolle vom Kernnetz nach der Aktivierung des Dienstes zur Verfügung gestellt wurde. Alternativ könnte das Verkehrsprofil auch bei der Bereitstellung des Multicast-Dienstes der Einrichtung zur Funkzugangskontrolle per Konfiguration mitgeteilt worden sein.

Somit ist die Einrichtung zur Funkzugangskontrolle aufgrund des vorliegenden Verkehrsprofils und der aktuellen Lastsituation in dem von ihr verwalteten Funkabdeckungsbereich in der Lage, zu entscheiden, welchen Konfigurationszustand die Teilnehmerstationen der Multicast-Gruppe zwischen den einzelnen Multicast-Informationen einnehmen sollen. Diese Entscheidung kann den Teilnehmerstationen in der Paging-Nachricht oder in der Nachricht des Multicast-Dienstes oder in einer separaten Signalisierungsnachricht, welche bereits vor oder auch nach der Nachricht des Multicast-Dienstes übermittelt werden kann, mitgeteilt werden.

Die Entscheidung über den zwischen den einzelnen Nutzinformationen des Multicast-Dienstes einzunehmenden Konfigurationszustand kann sowohl für die Gesamtheit der Teilnehmerstationen der Gruppe getroffen werden, als auch für eine oder mehrere Teilnehmerstationen unabhängig von den restlichen Teilnehmerstationen der Gruppe. In die Entscheidung kann auch eine Kombination von Parametern des Verkehrsprofils des Multicast-Dienstes mit teilnehmerspezifischen Parametern einfließen. So könnte z.B. bezüglich einer hoch priorisierten Teilnehmerstation die Entscheidung gefällt werden, dass diese im Verbindungsmodus verbleibt, während andere Teilnehmerstationen einen Wechsel in den Leerlaufmodus vollziehen.

Aufgrund des Austausches von Signalisierungsinformation zwischen einer Teilnehmerstation im Verbindungsmodus und der jeweiligen Basisstation bedeutet das Verbleiben einer Teilnehmerstation im Verbindungsmodus eine gesteigerte Auslastung des Funkkommunikationssystems. Andererseits bietet der Verbindungsmodus die Möglichkeit, dass zwischen dem Empfang der-Paging-Nachricht und der Nutinformation des Multicast-Dienstes keine Zeit für einen Wechsel des Konfigurationszustandes benötigt wird, so dass Echtzeitdaten ohne Verzögerung übertragen werden können. Ein weiterer Vorteil des Verbleibens im Verbindungsmodus besteht darin, dass dem Funknetz in diesem Fall der Aufenthaltsort der Teilnehmerstation bekannt ist. Diese Kenntnis ist dann von Relevanz, wenn die Nutzinformation des Multicast-Dienstes ausschließlich in den Funkzellen ausgestrahlt werden soll, in welchen sich Teilnehmerstationen der Multicast-Gruppe befinden.

Die Entscheidung der Einrichtung zur Funkzugangskontrolle besteht somit aus einer Abwägung einer Reihe von Einflussfaktoren. Im folgenden wird ein konkretes Beispiel für eine solche Entscheidung betrachtet: Der Inhalt des Multicast-Dienstes bestehe aus Informationen zu Unterhaltungsangeboten wie z.B. Kinoprogrammen; die Einrichtung zur Funkzugangskontrolle sei aufgrund einer Vielzahl von Teilnehmerstationen im Funkkommunikationssystem stark ausgelastet; dem Multicast-Dienst wird in dem Verkehrsprofil eine niedrige Priorität zugeordnet; der Multicast-Dienst wird mit einer Wiederholungsfrequenz von 30 Minuten ausgestrahlt. In diesem Fall entscheidet die Einrichtung zur Funkzugangskontrolle z.B., die Teilnehmerstationen in den Leerlaufmodus wechseln zu lassen.

Anders würde beispielsweise die Entscheidung der Einrichtung zur Funkzugangskontrolle ausfallen, wenn der Inhalt des Multicast-Dienstes aus Informationen über die Verkehrssituation wie z.B. Staumeldungen bestünde, aktuell nur ein kleiner Teil der Kapazität der Einrichtung zur Funkzugangskontrolle genutzt würde, dem Multicast-Dienst in dem Verkehrsprofil eine hohe Priorität zugeordnet wäre und die Nutzinformation des Multicast-Dienstes in Zeitabständen von 5 Minuten übertragen werden sollten. In diesem Fall wäre ein Verbleiben von zumindest einigen Gruppenteilnehmern der Multicast-Gruppe im Verbindungsmodus vorzuziehen.

Ist der Einrichtung zur Funkzugangskontrolle aufgrund des Verkehrsprofils des Multicast-Dienstes bekannt, dass der Dienst sehr häufig ausgestrahlt wird, so kann z.B. die Entscheidung getroffen werden, alle Teilnehmerstationen der Multicast-Gruppe im Verbindungsmodus zu halten. Diese Entscheidung kann den betreffenden Teilnehmerstationen direkt nach der Subskription des Dienstes mitgeteilt werden. Die Entscheidung muss in diesem Fall nicht nach jedem Aussenden des Dienstes erneut getroffen werden, sie ist für die Dauer der Ausstrahlung des Dienstes gültig. Da sich im beschriebenen Fall alle Teilnehmerstationen der Multicast-Gruppe im Verbindungsmodus befinden, kann auf das Aussenden einer Paging-Nachricht verzichtet werden. Der Einrichtung zur Funkzugangskontrolle ist aufgrund des Verbindungsmodus bekannt, ob sich in dem von ihr kontrollierten Bereich Teilnehmerstationen der Multicast-Gruppe aufhalten.

## Patentansprüche

1. Verfahren zum Betreiben eines Funkkommunikationssystems mit Teilnehmerstationen (UE1, UE2) und mindestens einer Einrichtung (RNC) zur Funkzugangskontrolle, wobei eine Kommunikation zwischen mindestens einer Basisstation (NODE B) und Teilnehmerstationen (UE1, UE2) über eine Luftschnittstelle erfolgt,
wobei Nutzinformationen (MULTICAST INFO) als Dienst einer Gruppe von Teilnehmerstationen (UE1, UE2) über Funk zur Verfügung gestellt werden,
wobei für mindestens eine Teilnehmerstation (UE1, UE2) der Gruppe mindestens zwei verschiedene Konfigurationszustände (IDLE, CONNECTED) zugänglich sind,
**dadurch gekennzeichnet,**
**dass** die Einrichtung (RNC) zur Funkzugangskontrolle aufgrund von einem oder mehreren Parametern entscheidet über die Art des nach dem Empfang der Nutzinformationen (MULTICAST INFO) von der mindestens einen Teilnehmerstation (UE1, UE2) einzunehmenden Konfigurationszustandes (IDLE, CONNECTED), und
**dass** die Entscheidung der mindestens einen Teilnehmerstation (UE1, UE2) mitgeteilt wird.

2. Verfahren nach Anspruch 1, **dadurch**
**gekennzeichnet,**
**dass** es sich bei dem einen Parameter oder bei mindestens einem der Parameter um einen Parameter des Dienstes handelt.

3. Verfahren nach Anspruch 2, **dadurch**
**gekennzeichnet,**
**dass** es sich bei dem einen Parameter oder bei dem mindestens einen der Parameter um eine Dienstpriorität oder um eine Wiederholfrequenz zur Aussendung des Dienstes oder um eine Länge von Nutzinformationen (MULTICAST INFO) des Dienstes oder um eine Anzahl von Nutzinformationen (MULTICAST INFO) oder um Information über die Behandlung des Dienstes durch andere Einrichtungen zur Funkzugangskontrolle oder um Kosteninformation handelt.

4. Verfahren nach einem der Ansprüche 1 bis 3, **dadurch**
**gekennzeichnet,**
**dass** es sich bei mindestens einem der Parameter um eine Eigenschaft der mindestens einen Teilnehmerstation (UE1, UE2) handelt.

5. Verfahren nach einem der Ansprüche 1 bis 4, **dadurch**
**gekennzeichnet,**
**dass** es sich bei den zugänglichen Konfigurationszuständen um einen Verbindungsmodus (CONNECTED) und einen Leerlaufmodus (IDLE) handelt.

6. Verfahren nach einem der Ansprüche 1 bis 5, **dadurch**
**gekennzeichnet,**
**dass** der Einrichtung (RNC) zur Funkzugangskontrolle mindestens einer der Parameter von einem mit der Einrichtung (RNC) zur Funkzugangskontrolle verbundenen Kernnetz (CN) oder von einer Einrichtung (OMC) zur Überwachung und Wartung des Funkkommunikationssystems übermittelt wurde.

7. Einrichtung (RNC) zur Funkzugangskontrolle zwischen mindestens einer Basisstation (NODE B) und Teilnehmerstationen (UE1, UE2) über eine Luftschnittstelle in einem Funkkommunikationssystem,
wobei Nutzinformationen (MULTICAST INFO) als Dienst einer Gruppe von Teilnehmerstationen (UE1, UE2) über Funk zur Verfügung gestellt werden,
wobei für mindestens eine Teilnehmerstation (UE1, UE2) der Gruppe mindestens zwei verschiedene Konfigurationszustände (IDLE, CONNECTED) zugänglich sind,
**dadurch gekennzeichnet,**
**dass** die Einrichtung (RNC) zur Funkzugangskontrolle Mittel zur Entscheidung aufgrund von einem oder mehreren Parametern über die Art des nach dem Empfang der Nutzinformationen (MULTICAST INFO) von der mindestens einen Teilnehmerstation (UE1, UE2) einzunehmenden Konfigurationszustandes (IDLE, CONNECTED) aufweist.

## Claims

1. Method for operation of a radio communication system with user stations (UE1, UE2) and at least one device (RNC) for radio access control, whereby communication takes place between at least one base station (NODE B) and user stations (UE1, UE2) over a wireless interface,
whereby useful information (MULTICAST INFO) is made available as a service to a group of user stations (UE1, UE2) via radio, whereby for at least one user station (UE1, UE2) in the group at least two different configuration statuses (IDLE, CONNECTED) are accessible,
**characterised in that**
the device (RNC) for radio access control decides on the basis of one or more parameters about the type of configuration status (IDLE, CONNECTED) to be adopted by the at least one user station (UE1, UE2) after receipt of the useful information, and that the decision is notified to the at least one user station (UE1, UE2).

2. Method according to claim 1,
**characterised in that**
one parameter or at least one of the parameters involves a parameter of the service.

3. Method according to claim 2,
**characterised in that**
one parameter or at least one of the parameters involves a service priority or a repetition frequency for emission of the service, or a length of useful information (MULTICAST INFO) of the service or a number of items of useful information (MULTICAST INFO) or information about the handling of the service by other devices for radio access control or cost information.

4. Method according to one of claims 1 to 3,
**characterised in that**
at least one of the parameters involves a property of at least one user station (UE1, UE2).

5. Method according to one of claims 1 to 4,
**characterised in that**
in accessible configuration statuses a connected mode (CONNECTED) and an idle mode (IDLE) are involved.

6. Method according to one of claims 1 to 5,
**characterised in that**
at least one of the parameters of a core network (CN) connected to the device (RNC) for radio access control or of a device (OMC) for monitoring and maintenance of the radio communication system was transmitted to the device (RNC) for radio access control.

7. Device (RNC) for radio access control between at least one base station (NODE B) and user stations (UE1, UE2) over a wireless interface in a radio communication system,
whereby useful information (MULTICAST INFO) is made available as a service to a group of user stations (UE1, UE2) via radio, whereby for at least one user station (UE1, UE2) in the group at least two different configuration statuses (IDLE, CONNECTED) are accessible,
**characterised in that**
the device (RNC) for radio access control has a means of making a decision on the basis of one or more parameters about the type of configuration status (IDLE, CONNECTED) to be adopted by the at least one user station (UE1, UE2) after receipt of the user information (MULTICAST INFO).

## Revendications

1. Procédé pour opérer un système de radiocommunication comprenant des stations d'abonnés (UE1, UE2) et au moins un dispositif (RNC) pour le contrôle d'accès radio, une communication entre au moins une station de base (NODE B) et des stations d'abonnés (UE1, UE2) étant effectuée par l'intermédiaire d'une interface à air,
des informations utiles (MULTICAST INFO) étant fournies par radio comme service d'un groupe de stations d'abonnés (UE1, UE2),
au moins deux états de configuration différents (IDLE, CONNECTED) étant accessibles pour au moins une station d'abonné (UE1, UE2) du groupe,
**caractérisé en ce**
**que** le dispositif (RNC) pour le contrôle d'accès radio décide, en raison d'un paramètre ou de plusieurs paramètres, du type de l'état de configuration (IDLE, CONNECTED) à prendre par l'au moins une station d'abonné (UE1, UE2) après la réception des informations utiles (MULTICAST INFO) et en ce que la décision est communiquée à l'au moins une station d'abonné (UE1, UE2).

2. Procédé selon la revendication 1, **caractérisé en ce**
**qu'**un paramètre ou l'au moins un paramètre est un paramètre du service.

3. Procédé selon la revendication 2, **caractérisé en ce**
**qu'**un paramètre ou l'au moins un paramètre est une priorité de service ou une fréquence de répétition pour l'émission du service ou une longueur d'informations utiles (MULTICAST INFO) du service ou un nombre d'informations utiles (MULTICAST INFO) ou une information concernant le traitement du service par d'autres dispositifs pour le contrôle d'accès radio ou une information de coûts.

4. Procédé selon l'une quelconque des revendications 1 à 3,
**caractérisé en ce**
**qu'**au moins un des paramètres est une caractéristique de l'au moins une station d'abonné (UE1, UE2),

5. Procédé selon l'une quelconque des revendications 1 à 4,
**caractérisé en ce**
**que** les états de configuration accessibles sont un mode de connexion (CONNECTED) et un mode de fonctionnement à vide (IDLE).

6. Procédé selon l'une quelconque des revendications 1 à 5,
**caractérisé en ce**
**qu'**au moins un des paramètres a été transmis au dispositif (RNC) pour le contrôle d'accès radio par un réseau central (CN) raccordé au dispositif (RNC) pour le contrôle d'accès radio ou par un dispositif (OMC) de contrôle et de maintenance du système de radiocommunication.

7. Dispositif (RNC) pour le contrôle d'accès radio dans un système de radiocommunication entre au moins une station de base (NODE B) et des stations d'abonnés (UE1, UE2) par l'intermédiaire d'une interface à air,
des informations utiles (MULTICAST INFO) étant fournies par radio comme service d'un groupe de stations d'abonnés (UE1, UE2),
au moins deux états de configuration différents (IDLE, CONNECTED) étant accessibles pour au moins une station d'abonné (UE1, UE2) du groupe,
**caractérisé en ce**
**que** le dispositif (RNC) pour le contrôle d'accès radio présente des moyens pour décider, en raison d'un paramètre ou de plusieurs paramètres, du type de l'état de configuration (IDLE, CONNECTED) à prendre par l'au moins une station d'abonné (UE1, UE2) après la réception des informations utiles (MULTICAST INFO).
